# EUROPÄISCHE PATENTANMELDUNG

(11) **EP 1 030 105 A2**
(43) Veröffentlichungstag der Anmeldung: **23.08.2000**
(21) Anmeldenummer: 00102942.0
(22) Anmeldetag: 14.02.2000
(51) Int. Cl.: F22B 1/16

(54) **Verfahren und Anlage zur Energierückgewinnung aus Abdampf**

(30) Priorität: 15.02.1999 AT 21199
(71) Anmelder: Andritz-Patentverwaltungs-Gesellschaft m.b.H., 8045 Graz (AT)
(72) Erfinder: Münster, Heinrich, Dipl.-Ing., 1190 Wien (AT)
(74) Vertreter: Schweinzer, Friedrich

(57) **Zusammenfassung**

Die Erfindung betrifft ein Verfahren zur Energierückgewinnung aus Abdampf einer thermomechanischen oder chemo- thermomechanischen Holzstoffanlage. Sie ist vornehmlich dadurch gekennzeichnet, daß der Abdampf erst zur Eindampfung von Abwasser und anschließend zur Erzeugung von Reindampf beispielsweise für eine Papiermaschine herangezogen wird. Weiters betrifft die Erfindung eine Anlage zur Durchführung des Verfahrens.

## Beschreibung

Die Erfindung betrifft ein Verfahren zur Energierückgewinnung aus Abdampf einer thermomechanischen oder chemo- thermomechanischen Holzstoffanlage. Sie betrifft weitem eine Anlage zur Durchführung des Verfahrens.

Der Abdampf von thermomechanischen (TMP) oder chemo- thermomechanischen (CTMP) Holzstoffanlagen fällt in der Regel mit einem Druckniveau von 0 bis 6 bar Überdruck an und wird bereits in einigen Fabriken zur Eindampfung von Abwasser eingesetzt. Das produzierte reine Destillat wird als Frischwasser-Ersatz an verschiedenen Stellen des Holzstoff- und/oder Papier-/Kartonerzeugungsprozesses verwendet. Derartige Eindampfanlagen arbeiten entweder nach dem mechanischen Brüdenverdichtungsprinzip oder nach dem mehrstufigen Verdampfungsprinzip, wobei der Abdampf der letzten Stufe in der Regel mittels eines Wasserkühlers kondensiert wird. Der hohe Bedarf an Kühlwasser bzw. die großen Mengen des anfallenden Warmwassers stellen häufig ein Problem dar.

Ziel der Erfindung ist es, diese Nachteile der bekannten Verfahren zu reduzieren bzw. eliminieren.

Die Erfindung ist daher dadurch gekennzeichnet, daß der Abdampf erst zur Eindampfung von Abwasser und anschließend zur Erzeugung von Reindampf, beispielsweise für eine Papiermaschine, herangezogen wird. Durch diese Kombination der Eindampfung und Reindampferzeugung kann das Schmutzdampf- Druck-/Temperaturniveau voll ausgenutzt und die Wärme weiter- bzw. wiederverwendet werden.

Eine vorteilhafte Weiterbildung der Erfindung ist dadurch gekennzeichnet, daß die Eindampfung in mehreren Stufen erfolgt. Durch die Aufteilung in mehrere Stufen ist eine effektivere Ausnutzung des Abdampfes zur Eindampfung möglich.

Eine günstige Ausgestaltung der Erfindung ist dadurch gekennzeichnet, daß Abdampf mit einem Druckniveau von 0 bis 6 bar Überdruck, vorzugsweise 4 - 6 bar Überdruck, eingesetzt wird. Bei diesem Druckniveau kann besonders günstig auch nach der Eindampfung noch Reindampf mit dem erforderlichen Druck erzeugt werden.

Eine günstige Weiterbildung der Erfindung ist dadurch gekennzeichnet, daß das Destillat aus der Abwassereindampfung als Frischwasserersatz in den Holzstoff- oder Papier-/Kartonerzeugungsprozess rückgeführt wird. Durch die Verwendung des reinen Destillates kann der Frischwassereinsatz stark reduziert werden.

Eine vorteilhafte Weiterbildung der Erfindung ist dadurch gekennzeichnet, daß das Kondensat des Abdampfes zur Vorwärmung des Abwassers eingesetzt wird. Dadurch kann die Wärmeökonomie des Verfahrens noch weiter verbessert werden.

Eine vorteilhafte Ausgestaltung der Erfindung ist dadurch gekennzeichnet, daß der Abdampf im Gegenstrom zum Abwasser geführt wird. Durch diese Dampfführung kann in optimaler Weise der Abwasserart, der Höhe der Aufkonzentration des Abwassers und der Siedepunkterhöhung Rechnung getragen werden.

Die Erfindung betrifft auch eine Anlage zur Energierückgewinnung aus einer thermomechanischen oder chemo- thermomechanischen Holzstoffanlage. Sie ist erfindungsgemäß dadurch gekennzeichnet, daß einer Abwassereindampfanlage ein Verdampfer zur Erzeugung von Dampf, beispielsweise für eine nachfolgende Papiermaschine, nachgeschaltet ist. Durch diese Kombination der Eindampfanlage und Verdampfer kann das Schmutzdampf- Druck-/Temperaturniveau voll ausgenutzt und die Wärme wiederverwendet werden. Weiters verringert sich der apparative Aufwand und es entfällt die Kondensationsstufe nach der Eindampfung vollständig.

Eine vorteilhafte Ausgestaltung der Erfindung ist dadurch gekennzeichnet, daß die Abwasserverdampfungsanlage mehrstufig ausgeführt ist.

Eine vorteilhafte Weiterbildung der Erfindung ist dadurch gekennzeichnet, daß eine Rückführleitung für das Destillat des Abwassers zum Holzstoff- oder Papier-/Kartonerzeugungsprozeß vorgesehen ist.

Eine günstige Ausgestaltung der Erfindung ist dadurch gekennzeichnet, daß ein Wärmetauscher zur Vorwärmung des Abwassers durch das Kondensat des Abdampfes und/oder durch das heiße Kondensat (Destillat) der Eindampfanlage vorgesehen ist. So ist eine bessere Wärmeausnutzung möglich.

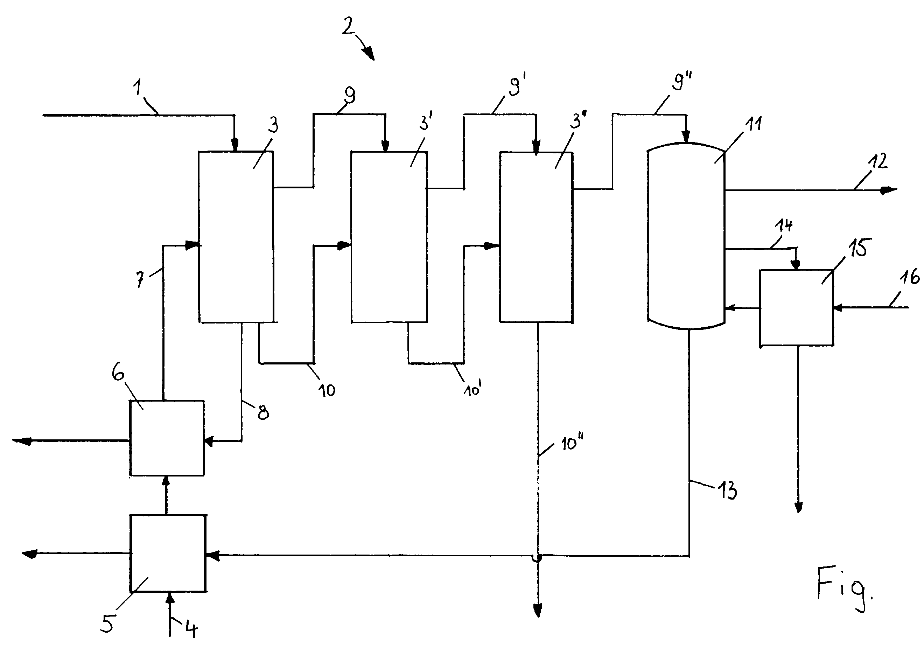

Die Erfindung wird nun anhand der Zeichnungen beispielhaft beschrieben, wobei Fig. 1 eine Anlage nach der Erfindung darstellt.

Fig. 1 stellt eine Anlage gemäß der Erfindung dar, wobei der TMP Abdampf über eine Leitung 1 dem Verdampfer 3 einer mehrstufigen Eindampfanlage 2 (hier als dreistufig dargestellt) zugeführt wird. Das Abwasser 4 gelangt über die Abwasservorwärmer 5 und 6 über eine Leitung 7 in den ersten Verdampfer 3 der Eindampfanlage 2. Das TMP Kondensat wird aus dem Verdampfer 3 über Leitung 8 abgeleitet und erhitzt im Abwasservorwärmer 6 das Abwasser. Anschließend wird das TMP Abdampfkondensat (= Schmutzkondensat) in den TMP- Erzeugungsprozeß zur Verdünnung zurückgeführt oder separat entsorgt.

Das Abwasser wird in der Eindampfanlage in den Verdampfern 3, 3', 3'' in einen Dampfstrom (Destillat) 9, 9', 9'' und einen Konzentratstrom 10, 10', 10'' aufgeteilt. Das Abwasserkonzentrat des letzten (hier dritten) Verdampfers 3'' wird über Leitung 10'' aus dem Kreislauf ausgeschieden und entsprechend entsorgt. Der Dampf wird über Leitung 9'' einem Fallfilmverdampfer 11 zugeführt, und das Reinwasser über Leitung 13 nach Vorwärmung des Abwassers im Abwasservorwärmer 5 wieder dem Prozeß zur Holzstofferzeugung und/oder Papier-/Kartonerzeugung als Frischwasserersatz zurückgeführt.

Ein Teilstrom des Kondensates von Fallfilmverdampfer 11 wird über Leitung 14 einem Speisewasservorwärmer zur Erhitzung des Speisewassers 16 zugeführt und anschließend abgeleitet, wobei dieser Kondensatstrom ebenfalls wieder in den Prozeß zurückgeführt werden kann.

In der folgenden Tabelle sind die einzelnen Stoffströme entsprechend Fig. 1 enthalten, die beispielhaft eine Stoff- und Energiebilanz einer Anlage gemäß der Erfindung darstellt. Es ist erkennbar, daß bei einem Einsatz von 1 t/h TMP Abdampf mittels einer wie im Beispiel dargestellten dreistufigen Eindampfanlage ca. 3 t/h Abwasser eingedampft und zusätzlich ca. 0,9 t/h Reindampf für z.B. die Papiertrocknung in einer Papiermaschine erzeugt werden können.

| Stoffstrom | Bezugszeichen | Druck [bar Überdruck] | Menge [t/h] | Temperatur [°C] |
|---|---|---|---|---|
| TMP Abdampf | 1 | 5 | 1 | 151,8 |
| Abwasser | 4 | | 3 | 60 |
| Abwasser vor Verdampfer 3 | 7 | | 3 | 126,6 |
| Dampf nach Verdampfer 3 | 9 | 4,5 | 0,9 | 147,9 |
| Konzentrat nach Verdampfer 3 | 10 | | 2,1 | 147,9 |
| Dampf nach Verdampfer 3' | 9' | 4,0 | 0,9 | 143,6 |
| Konzentrat nach Verdampfer 3' | 10' | | 1,2 | 143,6 |
| Dampf nach Verdampfer 3'' | 9'' | 3,5 | 0,9 | 138,8 |
| Konzentrat nach Verdampfer 3'' | 10'' | | 0,3 | 138,8 |
| Reindampf zu Papiermaschine | 12 | 3,0 | 0,86 | 133,5 |
| Speisewasser | 16 | | 0,86 | 110 |
| Kondensat aus Verdampfer 11 | 14 | | 0,05 | |
| Reinwasser (Destillat) zur Wiederverwertung vor Wärmetauscher 5 | 13 | | 2,65 | 138,6 |
| nach Wärmetauscher 5 | | | 2,65 | 70 |
| TMP Kondensat vor Wärmetauscher 6 | 8 | | 1,0 | 147,9 |
| TMP Kondensat nach Wärmetauscher 6 | | | 1,0 | 130 |

## Patentansprüche

1. Verfahren zur Energierückgewinnung aus Abdampf einer thermomechanischen oder chemo- thermomechanischen Holzstoffanlage, dadurch gekennzeichnet, daß der Abdampf erst zur Eindampfung von Abwasser und anschließend zur Erzeugung von Reindampf, beispielsweise für eine Papiermaschine, herangezogen wird.

2. Verfahren nach Anspruch 1, dadurch gekennzeichnet, daß die Eindampfung in mehreren Stufen erfolgt.

3. Verfahren nach Anspruch 1 oder 2, dadurch gekennzeichnet, daß Abdampf mit einem Druckniveau von 0 bis 6 bar Überdruck, vorzugsweise 4 - 6 bar Überdruck, eingesetzt wird.

4. Verfahren nach einem der Ansprüche 1 bis 3, dadurch gekennzeichnet, daß das Destillat aus der Abwassereindampfung als Frischwasserersatz in den Holzstoff- oder Papier-/Kartonerzeugungsprozess rückgeführt wird.

5. Verfahren nach einem der Ansprüche 1 bis 4, dadurch gekennzeichnet, daß das Kondensat aus Abdampf zur Vorwärmung des Abwassers eingesetzt wird.

6. Verfahren nach einem der Ansprüche 1 bis 5, dadurch gekennzeichnet, daß der Abdampf im Gegenstrom zum Abwasser geführt wird.

7. Anlage zur Energierückgewinnung aus einer thermomechanischen oder chemo- thermomechanischen Holzstoffanlage, dadurch gekennzeichnet, daß einer Abwassereindampfanlage ein Verdampfer zur Erzeugung von Dampf beispielsweise für eine nachfolgende Papiermaschine, nachgeschaltet ist.

8. Anlage nach Anspruch 7, dadurch gekennzeichnet, daß die Abwasserverdampfungsanlage mehrstufig ausgeführt ist.

9. Anlage nach Anspruch 7 oder 8, dadurch gekennzeichnet, daß eine Rückführleitung für das Destillat des Abwassers zum Holzstoff- oder Papier-/Kartonerzeuigungsprozeß vorgesehen ist.

10. Anlage nach einem der Ansprüche 7 bis 9, dadurch gekennzeichnet, daß ein Wärmetauscher zur Vorwärmung des Abwassers durch das Kondensat des Abdampfes und/oder durch das heiße Kondensat (Destillat) der Eindampfanlage vorgesehen ist.
